# EUROPÄISCHE PATENTSCHRIFT

(11) **EP 2 930 358 B1**
(45) Veröffentlichungstag und Bekanntmachung des Hinweises auf die Patenterteilung: **29.08.2018**
(21) Anmeldenummer: 14164233.0
(22) Anmeldetag: 10.04.2014
(51) Int. Cl.: F03D 80/30, F03D 80/40, F03D 1/06

(54) **Windenergieanlagenrotorblatt mit einem Potentialausgleichselement**
Wind turbine rotor blade with a potential equalisation element
Pale de rotor d'éolienne dotée d'un élément de compensation de potential

(43) Veröffentlichungstag der Anmeldung: 14.10.2015
(73) Patentinhaber: Nordex Energy GmbH, 22419 Hamburg (DE)
(72) Erfinder: Ohlerich, Nick, 18055 Rostock (DE)
(74) Vertreter: Hauck Patentanwaltspartnerschaft mbB

(56) Entgegenhaltungen:
- JP-A- 2009 115 052
- JP-A- 2010 059 813
- JP-A- 2012 246 815
- US-A1- 2009 246 025

## Beschreibung

Die Erfindung betrifft ein Windenergieanlagenrotorblatt mit einem druckseitigen und einem saugseitigen Blitzschutzleiter, die elektrisch über ein Potentialausgleichselement miteinander verbunden sind.

Es ist bekannt, Windenergieanlagenrotorblätter mit einer Blitzschutzeinrichtung vor Schäden durch einen Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Aus der Druckschrift WO 00/79128 A1 ist ein Windenergieanlagenrotorblatt mit einem zentral angeordneten Blitzschutzleiter bekannt geworden. Zwei weitere elektrische Leitungen verlaufen ebenfalls in Längsrichtung des Rotorblatts und dienen zur Bestromung einer elektrischen Heizeinrichtung. Sie sind im Bereich der Blattspitze über Funkenstrecken mit dem zentralen Blitzschutzleiter verbunden. Zusätzliche Potentialausgleichselemente sind nicht vorgesehen.

Aus der Druckschrift EP 1 692 752 B1 ist ein Windenergieanlagenrotorblatt bekannt geworden, bei dem ein innenliegender, elektrisch leitfähiger Holm mit einem benachbart angeordneten Blitzschutzleiter verbunden ist. Hierzu sind im Inneren des Rotorblatts Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift EP 1 664 528 B1 ist ein Windenergieanlagenrotorblatt mit elektrisch leitfähigen Hauptgurten aus einem Kohlenstofffasermaterial und zwei im Inneren des Rotorblatts angeordneten Blitzschutzleitern bekannt geworden. Die Hauptgurte sind über Kupfergitter mit Blitzschutzrezeptoren verbunden. Zwischen den Blitzschutzrezeptoren und den innenliegenden Blitzschutzleitern wird eine elektrische Verbindung über innenliegende, elektrische Leiter hergestellt.

Aus der Druckschrift DE 10 2012 108 124 A1 ist ein Windenergieanlagenrotorblatt bekannt geworden, bei dem ein Blitzschutzleiter aus einem Band aus elektrisch leitfähigem Material besteht, das um die Profilendkante herum an der Außenseite des Rotorblatts angeordnet ist. An der Profilendkante gibt es außerdem eine Geräuschminderungsvorrichtung mit Zacken aus Metall, die mit dem leitfähigen Band elektrisch verbunden sind und als Blitzschutzrezeptoren wirken.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Zur Erhöhung der elektrischen Leitfähigkeit der Gurte werden metallbeschichtete Kohlenstoffasern eingesetzt, sodass die Stromtragfähigkeit der Gurte für einen Einsatz als Blitzschutzleiter ausreichen soll. Zusätzlich kann ein zentral angeordneter metallischer Blitzschutzleiter eingesetzt werden. Die Gurte und gegebenenfalls der zusätzliche metallische Blitzschutzleiter sind an mehreren Längspositionen über Potentialausgleichelemente in Form von innenliegenden, elektrischen Leitern miteinander verbunden.

Die Druckschrift JP 2010059813A zeigt ein Windenergieanlagenrotorblatt mit mehreren Blitzschutzrezeptoren, die jeweils mit einem druckseitigen oder mit einem saugseitigen Blitzschutzleiter verbunden sind. An der Außenseite des Rotorblatts gibt es zusätzlich erste und zweite Ableitmittel, die jeweils eine elektrisch leitfähige Schicht, beispielsweise eine dünne Metallfolie, und eine elektrisch isolierende Schicht aufweisen. Die ersten Ableitmittel sind entlang der Profilnasenkante und der Profilendkante angeordnet, die zweiten Ableitmittel verlaufen in Richtung der Profiltiefe, jeweils über einen Blitzschutzrezeptor, mit dem Sie elektrisch leitfähig verbunden sind, hinweg.

Die Druckschrift JP 2012246815 A beschreibt ein Windenergieanlagenrotorblatt, das in einigen Ausführungsbeispielen zwei Blitzschutzleiter aufweist, die im Bereich der Profilnasenkante bzw. im Bereich der Profilendkante angeordnet sind. Im Ausführungsbeispiel der Fig. 17 sind diese Blitzschutzleiter jeweils mit zwei Blitzschutzrezeptoren verbunden, von denen einer an der Saugseite und einer an der Druckseite angeordnet ist. Diese Blitzschutzrezeptoren sind über um die Profilnasenkante bzw. um die Profilendkante herum geführte, elektrisch leitfähige Schichten miteinander verbunden.

Davon ausgehend ist es die Aufgabe der Erfindung, ein Windenergieanlagenrotorblatt mit einem druckseitigen und einem saugseitigen Blitzschutzleiter, die über ein Potentialausgleichselement miteinander verbunden sind, zur Verfügung zu stellen, das einfacher gefertigt werden kann und einen verbesserten Blitzschutz ermöglicht, sowie ein Verfahren zur Herstellung eines solchen Windenergieanlagenrotorblatts.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, eine Druckseite, eine Saugseite, eine Profilendkante, einen druckseitigen Blitzschutzleiter und einen saugseitigen Blitzschutzleiter, wobei sich die beiden Blitzschutzleiter von einem Anschlusspunkt im Bereich der Blattwurzel bis in den Bereich einer Blattspitze erstrecken und dazu ausgebildet sind, einen Blitzstrom in Richtung zu der Blattwurzel hin abzuleiten, und ein Potentialausgleichselement, das die beiden Blitzschutzleiter elektrisch miteinander verbindet, wobei das Potentialausgleichselement an einer Außenseite des Windenergieanlagenrotorblatts angeordnet ist und um die Profilendkante herum führt.

Das Windenergieanlagenrotorblatt kann für eine Windenergieanlage mit im Wesentlichen horizontaler Achse bestimmt sein. Es kann aus einem Faserverbundmaterial hergestellt sein, insbesondere aus zwei miteinander verbundenen Halbschalen. Es kann eine aerodynamische Hülle, die zum Beispiel von den Außenseiten der beiden Halbschalen gebildet ist, sowie einen oder mehrere Gurte aufweisen, beispielsweise aus glasfaser- oder kohlenstofffaserverstärktem Kunststoff. Die beiden Halbschalen können über einen oder mehrere Stege miteinander verbunden sein, die insbesondere zwischen zwei einander gegenüberliegenden Hauptgurten angeordnet sein können.

Die beiden Blitzschutzleiter können sich im Wesentlichen über die gesamte Länge des Windenergieanlagenrotorblatts erstrecken. Sie erstrecken sich von einem Anschlusspunkt im Bereich der Blattwurzel bis in den Bereich der Blattspitze. Dort können sie mit einem an der Blattspitze angeordneten Blitzschutzrezeptor verbunden sein. Sie können auch in einem Abstand von dem Blitzschutzrezeptor enden. Eine elektrische Verbindung zwischen dem Blitzschutzrezeptor und mindestens einem der Blitzschutzleiter kann über ein Verbindungselement hergestellt sein.

Die Erfindung beruht auf der Erkenntnis, dass die Montage von aus dem Stand der Technik bekannten, im Inneren des Rotorblatts angeordneten Potentialausgleichselementen zwischen zwei der Druck- und Saugseite zugeordneten Blitzschutzleitern erheblichen Schwierigkeiten begegnet. Dies gilt insbesondere an relativ weit außen gelegenen Radiuspositionen des Rotorblatts, insbesondere etwa im äußeren Drittel des Windenergieanlagenrotorblatts. Dort ist die Profildicke des Windenergieanlagenrotorblatts in der Regel so gering, dass das Innere des Rotorblatts nach dem Zusammenfügen des Windenergieanlagenrotorblatts, zum Beispiel aus zwei Halbschalen, nicht mehr ohne Weiteres zugänglich ist. Gleichzeitig ist ein zuverlässiger Potentialausgleich gerade nahe der Blattspitze besonders wichtig, weil die beiden Blitzschutzleiter dort in einem relativ geringen Abstand voneinander angeordnet sind, sodass es dort besonders schnell zu Überschlägen kommt.

Die Erfindung löst diese Schwierigkeiten dadurch, dass das Potentialausgleichselement an einer Außenseite des Windenergieanlagenrotorblatts angeordnet ist und um die Profilendkante herumführt. Das Potentialausgleichselement kann nach dem Zusammenfügen des Windenergieanlagenrotorblatts, beispielsweise aus zwei Halbschalen, montiert werden. Hierfür muss das Potentialausgleichselement an dem Windenergieanlagenrotorblatt befestigt werden, und es muss eine elektrische Verbindung zwischen dem Potentialausgleichselement und den beiden Blitzschutzleitern hergestellt werden, was unter Verwendung geeigneter Verbindungsmittel einfach von außen möglich ist. Das Potentialausgleichselement kann in Strömungsrichtung des Windenergieanlagenrotorblatts ausgerichtet sein, um die aerodynamische Wirksamkeit des Windenergieanlagenrotorblatts so wenig wie möglich zu beeinträchtigen.

Ein weiterer Vorteil der erfindungsgemäßen Anordnung des Potentialausgleichselements ist, dass das Potentialausgleichselement selbst als weiterer Blitzschutzrezeptor dienen kann. Das Herumführen des Potentialausgleichselements um die Profilendkante begünstigt diese Wirkung, weil im Bereich der in der Regel spitz auslaufenden Profilendkante geometriebedingt besonders hohe Feldstärken auftreten.

Es versteht sich, dass das erfindungsgemäße Windenergieanlagenrotorblatt mehrere Potentialausgleichselemente der beschriebenen Art aufweisen kann, insbesondere verteilt über einen Längsabschnitt im äußeren Drittel des Windenergieanlagenrotorblatts. Beispielsweise können zwei oder mehr Potentialausgleichselemente in einem Abstand voneinander und von der Blattspitze in diesem Bereich angeordnet sein.

In einer Ausgestaltung weist das Potentialausgleichselement eine druckseitige Metallschiene und eine saugseitige Metallschiene auf, die im Bereich der Profilendkante elektrisch miteinander verbunden sind oder ineinander übergehen. Die Metallschienen können beispielsweise aus Kupfer, Aluminium, Eisen oder einer Legierung mit einer ausreichenden elektrischen Leitfähigkeit bestehen. Die Metallschienen können aus massivem Metall bestehen. Die Verwendung von Metallschienen stellt eine ausreichende Stromtragfähigkeit sicher und begünstigt eine einfache und sichere Befestigung am Windenergieanlagenrotorblatt. Die beiden Metallschienen können nach ihrer Montage am Windenergieanlagenrotorblatt miteinander verbunden werden. Alternativ können sie eine vorgefertigte Einheit bilden. Auch eine einstückige Ausbildung ist möglich, beispielsweise in Form einer einzigen Metallschiene, die um die Profilendkante herum gebogen ist. In diesem Fall gehen die beiden Metallschienen an der Profilendkante ineinander über.

In einer Ausgestaltung weisen die druckseitige Metallschiene und/oder die saugseitige Metallschiene jeweils einen Querschnitt von 25 mm² oder mehr und/oder eine Breite von 30 mm oder mehr auf. Der Querschnitt kann auch mehr als 50 mm² oder mehr als 100 mm² betragen und die Breite kann auch mehr als 50 mm oder mehr als 80 mm betragen. Entsprechend großformatige Metallschienen weisen eine hohe Stromtragfähigkeit auf und bilden einen besonders wirksamen Blitzschutzrezeptor.

In einer Ausgestaltung weisen die druckseitige Metallschiene und/oder die saugseitige Metallschiene eine Höhe auf, die sich an seitlichen Rändern und/oder an einem vorderen Rand bis auf 1 mm oder weniger verringert. Beispielsweise kann die Höhe der Metallschienen in der Mitte 3 mm oder mehr oder 5 mm oder mehr betragen. Im Querschnitt können die Metallschienen eine gekrümmte äußere Fläche aufweisen oder zum Beispiel trapezförmig ausgebildet sein. Der Vorteil der sich an den Rändern verringernden Höhe ist eine besonders geringe Beeinträchtigung der aerodynamischen und aeroakustischen Verhältnisse am Windenergieanlagenrotorblatt.

In einer Ausgestaltung stehen die beiden Metallschienen mit ihren hinteren Enden über die Profilendkante über und grenzen flächig aneinander. Soweit jetzt und im Folgenden Richtungsangaben wie "hinten" oder "vorn" verwendet werden, beziehen sich diese auf die Strömungsrichtung um das Windenergieanlagenrotorblatt herum im Betrieb. Die Profilnasenkante ist vorn, die Profilendkante hinten. Insbesondere kann eine Kontaktfläche zwischen den beiden hinteren Enden der Metallschienen größer als 10 mm² sein oder größer als 30 mm². Die beiden Metallschienen können insbesondere miteinander verschweißt sein. Versuche haben ergeben, dass das Überstehen der Metallschienen über die Profilendkante unter aerodynamischen Gesichtspunkten vertretbar ist. So kann ein großflächiger elektrischer Kontakt hergestellt werden, ohne die unterhalb der Metallschienen angeordnete Profilendkante zu schwächen. Die an der Verbindungsstelle am hinteren Ende der Metallschienen gebildete Kante kann parallel zu Profilendkante verlaufen.

In einer Ausgestaltung sind die beiden Metallschienen im Bereich der Profilendkante über eine Verschraubung miteinander verbunden. Durch die Verschraubung werden die Kontaktflächen der beiden Metallschienen so zusammengepresst, dass eine blitzstromtragfähige Verbindung entsteht. Insbesondere kann ein Gewindebolzen mit einem M6-Gewinde oder größer verwendet werden, um die Endkantenkontur geometrisch möglichst wenig zu beeinflussen. Die Verschraubung kann insbesondere durch eine Bohrung durch das Windenergieanlagenrotorblatt im Bereich der Profilendkante hindurch geführt sein, sodass zusätzlich zu der elektrischen Verbindung zugleich eine mechanische Fixierung der Metallschienen im Bereich der Profilendkante erzielt wird. Alternativ können die Schienen auch miteinander vernietet sein.

In einer Ausgestaltung weisen die beiden Metallschienen an ihren hinteren Enden zusammen eine Höhe von 5 mm oder weniger auf. Insbesondere kann die Höhe der beiden Metallschienen so gewählt werden, dass sie einer Dicke der Profilendkante entspricht, zum Beispiel im Bereich von 2 mm bis 4 mm. In diesem Fall strömt die Luft am hinteren Ende des Potentialausgleichselements ähnlich glatt ab wie in benachbarten Bereichen der Profilendkante.

In einer Ausgestaltung sind ein vorderes Ende der druckseitigen Metallschiene in Strömungsrichtung hinter einem druckseitigen Hauptgurt und/oder ein vorderes Ende der saugseitigen Metallschiene in Strömungsrichtung hinter einem saugseitigen Hauptgurt angeordnet. In diesem Fall gelingt die elektrische Verbindung zwischen den vorderen Enden der Metallschienen und den Blitzschutzleitern ohne die Integrität der Gurte zu gefährden. Außerdem ist eine relativ weit hinten liegende Anordnung der Metallschienen aerodynamisch vorteilhaft.

In einer Ausgestaltung weisen die druckseitige Metallschiene und/oder die saugseitige Metallschiene eine Krümmung auf, die einer Oberflächenkrümmung der Druckseite bzw. der Saugseite entspricht. Insbesondere können die Metallschienen im Wesentlichen mit ihrer gesamten, dem Windenergieanlagenrotorblatt zugewandten Fläche an der Oberfläche des Windenergieanlagenrotorblatts anliegen. Die Metallschienen können mit der Oberfläche des Windenergieanlagenrotors verklebt sein.

In einer Ausgestaltung sind der saugseitige Blitzschutzleiter an einer Innenseite einer saugseitigen Halbschale und/oder der druckseitige Blitzschutzleiter an einer Innenseite einer druckseitigen Halbschale des Windenergieanlagenrotorblatts angeordnet. Grundsätzlich können die Blitzschutzleiter auch in einem Abstand von den Wandungen der betreffenden Halbschalen angeordnet sein. Eine Anordnung an der Innenseite und/oder ganz oder teilweise in die betreffenden Halbschalen integriert hat jedoch den Vorteil, dass die Herstellung einer elektrischen Verbindung zu den Blitzschutzleitern von der Außenseite des Windenergieanlagenrotorblatts besonders einfach möglich ist.

In einer Ausgestaltung weisen der saugseitige Blitzschutzleiter und/oder der druckseitige Blitzschutzleiter jeweils einen metallischen Leiter mit einem Querschnitt von 25 mm² oder mehr auf. Insbesondere kann der Querschnitt auch 50 mm² oder mehr betragen. Grundsätzlich kommen als Blitzschutzleiter auch elektrisch leitfähige Gurte, insbesondere aus einem Kohlenstofffasermaterial, in Betracht. Die Verwendung metallischer Leiter mit dem genannten Mindestquerschnitt stellt jedoch eine besonders einfache und kostengünstige Lösung dar.

In einer Ausgestaltung verlaufen der saugseitige Blitzschutzleiter entlang einem saugseitigen Gurt und/oder der druckseitige Blitzschutzleiter entlang einem druckseitigen Gurt. Insbesondere im Falle eines Gurts aus einem elektrisch leitfähigen Material, insbesondere mit Kohlenstofffasern, kann ein elektrischer Kontakt zwischen dem Blitzschutzleiter und dem Gurt hergestellt werden, sodass die Potentialausgleichselemente nicht nur einen Potentialausgleich zwischen den beiden Blitzschutzleitern, sondern zugleich zwischen den elektrisch leitfähigen Gurten herstellen.

In einer Ausgestaltung weist das Windenergieanlagenrotorblatt an einer Außenseite im Bereich einer Profilnasenkante eine Heizeinrichtung auf. Insbesondere kann es sich um eine elektrische Heizeinrichtung handeln, die beispielsweise einen flächigen elektrischen Leiter aufweist. Die erfindungsgemäße Anordnung des Potentialausgleichselements um die Profilendkante herum kann ohne Weiteres mit einer solchen Heizeinrichtung kombiniert werden. Insbesondere kommt es zu keiner Beeinträchtigung der Heizwirkung durch das Potentialausgleichselement und auch nicht zu einer Beschädigung der Heizeinrichtung infolge eines Blitzschlags in das Potentialausgleichselement.

Die oben genannte Aufgabe wird ebenfalls gelöst durch das Verfahren zur Herstellung eines Windenergieanlagenrotorblatts mit den Merkmalen des Anspruchs 14. Eine vorteilhafte Ausgestaltung ist in dem sich anschließenden Unteranspruch angegeben.

Das Verfahren zur Herstellung eines Windenergieanlagenrotorblatts weist die folgenden Schritte auf:
- Herstellen einer druckseitigen Halbschale, die einen druckseitigen Blitzschutzleiter aufweist,
- Herstellen einer saugseitigen Halbschale, die einen saugseitigen Blitzschutzleiter aufweist, wobei sich der druckseitige Blitzschutzleiter und der saugseitige Blitzschutzleiter von einem Anschlusspunkt im Bereich der Blattwurzel bis in den Bereich einer Blattspitze erstrecken,
- Zusammenfügen der beiden Halbschalen zu dem Windenergieanlagenrotorblatt,
- Anordnen eines Potentialausgleichselements an einer Außenseite des Windenergieanlagenrotorblatts, sodass das Potentialausgleichselement um eine Profilendkante des Windenergieanlagenrotorblatts herumführt,
- Herstellen einer elektrischen Verbindung zwischen dem Potentialausgleichselement und dem druckseitigen Blitzschutzleiter sowie zwischen dem Potentialausgleichselement und dem saugseitigen Blitzschutzleiter.

Das Verfahren kann insbesondere zur Herstellung eines Windenergieanlagenrotorblatts verwendet werden, das einer oder mehrerer der vorstehend im Einzelnen erläuterten Ausgestaltungen entspricht. Es versteht sich, dass das Verfahren mit jedem der vorstehend erläuterten Merkmale des Windenergieanlagenrotorblatts kombiniert werden kann.

Eine Besonderheit des Verfahrens besteht darin, dass das Potentialausgleichselement an einer Außenseite des Windenergieanlagenrotorblatts, das zuvor bereits aus zwei Halbschalen zusammengefügt wurde, angeordnet wird. Zu den Vorteilen und Merkmalen des Verfahrens wird auf die vorstehenden Erläuterungen des Windenergieanlagenrotorblatts verwiesen, die entsprechend gelten.

In einer Ausgestaltung des Verfahrens weist das Potentialausgleichselement eine druckseitige Metallschiene und/oder eine saugseitige Metallschiene auf, die vor dem Anordnen des Potentialausgleichselements an dem Windenergieanlagenrotorblatt mit einer Krümmung versehen wird, die einer Oberflächenkrümmung der Druckseite bzw. der Saugseite entspricht. Mit anderen Worten werden eine oder beide Metallschienen passgenau vorgefertigt, wodurch sich die Montage des Potentialausgleichselements an dem Windenergieanlagenrotorblatt weiter vereinfacht.

Die Erfindung wird nachfolgend anhand eines in Figuren dargestellten Ausführungsbeispiels näher erläutert. Es zeigen:
- Fig. 1: ein erfindungsgemäßes Windenergieanlagenrotorblatt in einer vereinfachten, perspektivischen Darstellung,
- Fig. 2: einen Querschnitt durch das Windenergieanlagenrotorblatt der Fig. 1 entlang der mit A-A bezeichneten Ebene,
- Fig. 3: eine Ausschnittsvergrößerung des in Fig. 2 mit B bezeichneten Bereichs,
- Fig. 4: eine Ausschnittsvergrößerung des in Fig. 1 mit C bezeichneten Bereichs.

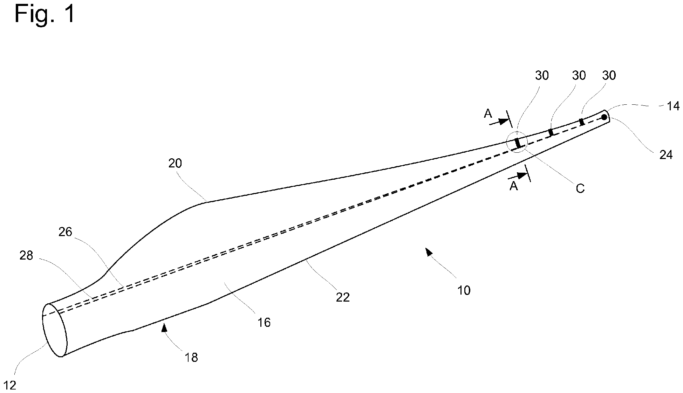

Das Windenergieanlagenrotorblatt 10 aus Fig. 1 hat eine Blattwurzel 12 und eine Blattspitze 14. In der Figur ist der Blick im Wesentlichen auf die Druckseite 16 gerichtet; auf der vom Betrachter abgewandten Seite hat das Windenergieanlagenrotorblatt 10 eine Saugseite 18.

Das Windenergieanlagenrotorblatt 10 hat eine Profilendkante 20 und eine Profilnasenkante 22. Im Bereich der Blattspitze 14 ist ein Blitzschutzrezeptor 24 angeordnet, der mit einem gestrichelt angedeuteten druckseitigen Blitzschutzleiter 26 elektrisch leitend verbunden ist. Über den druckseitigen Blitzschutzleiter 26 kann der Strom eines in den Blitzschutzrezeptor 24 einschlagenden Blitzes in Richtung zur Blattwurzel 12 hin abgeleitet werden.

In der Fig. 1 ebenfalls nur angedeutet ist ein saugseitiger Blitzschutzleiter 28, der sich ebenfalls von der Blattwurzel 12 bis in den Bereich der Blattspitze 14 erstreckt. Drei Potentialausgleichselemente 30 stellen eine elektrische Verbindung zwischen dem saugseitigen Blitzschutzleiter 26 und dem druckseitigen Blitzschutzleiter 28 her. Sie sind ungefähr im äußeren Drittel des Windenergieanlagenrotorblatts 10 angeordnet und weisen voneinander sowie von der Blattspitze 14 jeweils einen Abstand auf.

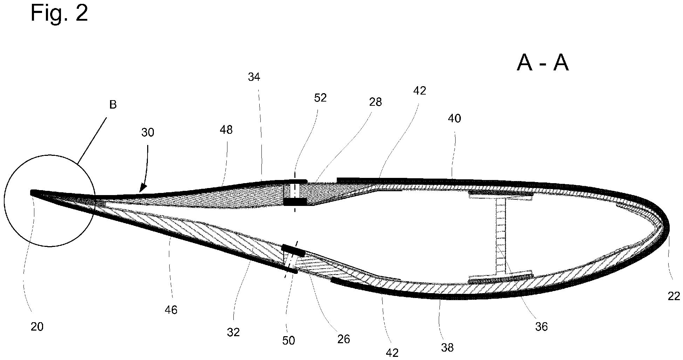

Einzelheiten der Potentialausgleichselemente 30 sind in den weiteren Figuren besser erkennbar. Fig. 2 zeigt einen Querschnitt entlang der in Fig. 1 mit A-A bezeichneten Ebene. Man erkennt eine saugseitige Halbschale 32 und eine druckseitige Halbschale 34, die im Bereich der Profilnasenkante 22 und im Bereich der Profilendkante 20 sowie über einen Steg 36 miteinander verbunden sind. Die Höhe des Stegs 36 an der dargestellten Querschnittsposition liegt beispielsweise im Bereich von 50 mm bis 200 mm, sodass das Innere des Windenergieanlagenrotorblatts nicht ohne Weiteres zugänglich ist.

Die saugseitige Halbschale 32 weist einen saugseitigen Hauptgurt 38 auf. Die druckseitige Halbschale 34 weist einen druckseitigen Hauptgurt 40 auf. Die beiden Hauptgurte 38, 40 bestehen im Beispiel aus einem Kohlenstofffasermaterial. Die übrigen Bestandteile der beiden Halbschalen 32, 34 bestehen im Beispiel aus einem Faserverbundmaterial mit Glasfasern.

Der saugseitige Blitzschutzleiter 26 ist an der Innenseite der saugseitigen Halbschale 32 angeordnet und in diese integriert. Er verläuft benachbart zu dem saugseitigen Hauptgurt 38 und ist elektrisch mittels eines Kupfergewebes 42 mit dem saugseitigen Hauptgurt 38 verbunden. Der druckseitige Blitzschutzleiter 28 ist an der Innenseite der druckseitigen Halbschale 34 angeordnet und in diese integriert. Er verläuft entlang dem druckseitigen Hauptgurt 40 und ist über ein weiteres Kupfergewebe 42 elektrisch leitend mit diesem verbunden.

Eine elektrische Heizeinrichtung mit einem Heizelement 44 aus einem Kohlenstofffasermaterial ist im Bereich der Profilnasenkante 22 an der Außenseite des Windenergieanlagenrotorblatts 10 angeordnet.

Das Potentialausgleichselement 30 weist eine saugseitige Metallschiene 46 und eine druckseitige Metallschiene 48 auf. Das vordere Ende der saugseitigen Metallschiene 46 ist über ein Verbindungselement 50 mit dem saugseitigen Blitzschutzleiter 26 elektrisch verbunden. Das vordere Ende der druckseitigen Metallschiene 48 ist über ein Verbindungselement 52 mit dem druckseitigen Blitzschutzleiter 28 elektrisch verbunden.

Die hinteren Enden der beiden Metallschienen 46, 48 stehen über die Profilendkante 20 über und grenzen hinter der Profilendkante 20 flächig aneinander an. Sie sind dort durch Verschweißen miteinander verbunden.

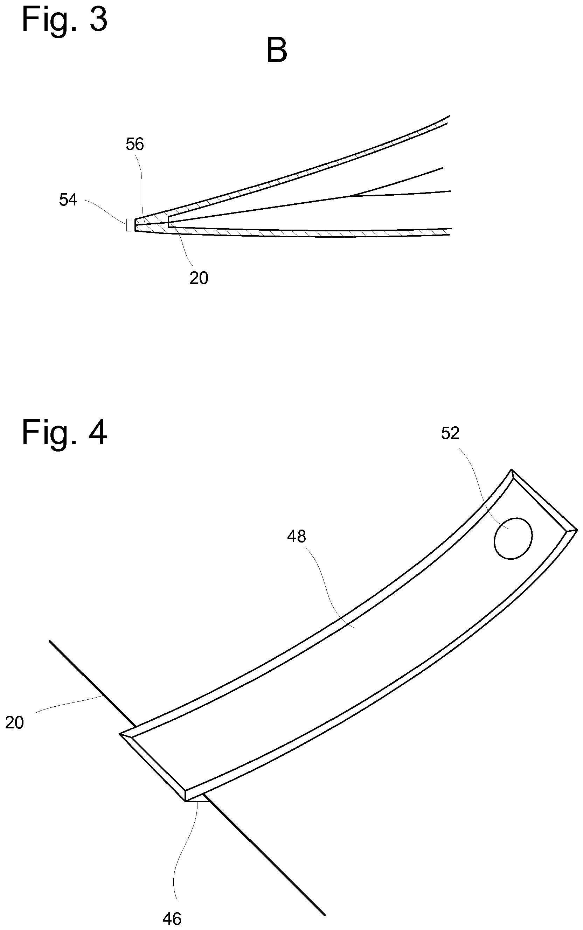

In der Ausschnittsvergrößerung der Fig. 3 erkennt man die große Kontaktfläche 56 zwischen den beiden Metallschienen 46, 48. Außerdem eingezeichnet ist eine Höhe 54 der beiden Metallschienen 46, 48, die im Wesentlichen der Dicke der Profilendkante 20 entspricht.

Fig. 4 zeigt eines der Potentialausgleichselemente 30 in einer perspektivischen Ansicht. Man erkennt auch in dieser Ansicht das Zusammenlaufen der saugseitigen Metallschiene 46 und der druckseitigen Metallschiene 48 im Bereich der Profilendkante 20. Ebenfalls erkennbar ist, dass die beiden Metallschienen 46, 48 zu ihren seitlichen und vorderen Rändern hin dünn auslaufen, bis auf eine Höhe von 1 mm oder weniger. Im Querschnitt sind die beiden Metallschienen 46, 48 trapezförmig. Das Verbindungselement 52 stellt die elektrische Verbindung zwischen der druckseitigen Metallschiene 48 und dem in der Fig. 4 nicht dargestellten, druckseitigen Blitzschutzleiter 28 her.

### Liste der verwendeten Bezugszeichen:

- 10: Windenergieanlagenrotorblatt
- 12: Blattwurzel
- 14: Blattspitze
- 16: Druckseite
- 18: Saugseite
- 20: Profilendkante
- 22: Profilnasenkante
- 24: Blitzschutzrezeptor
- 26: saugseitiger Blitzschutzleiter
- 28: druckseitiger Blitzschutzleiter
- 30: Potentialausgleichselement
- 32: saugseitige Halbschale
- 34: druckseitige Halbschale
- 36: Steg
- 38: saugseitiger Hauptgurt
- 40: druckseitiger Hauptgurt
- 42: Kupfergewebe
- 44: Heizelement
- 46: saugseitige Metallschiene
- 48: druckseitige Metallschiene
- 50: Verbindungselement
- 52: Verbindungselement
- 54: Höhe
- 56: Kontaktfläche

## Patentansprüche

1. Windenergieanlagenrotorblatt (10) mit einer Blattwurzel (12), einer Druckseite (16), einer Saugseite (18), einer Profilendkante (20), einem druckseitigen Blitzschutzleiter (28) und einem saugseitigen Blitzschutzleiter (26), wobei sich die beiden Blitzschutzleiter (26, 28) von einem Anschlusspunkt im Bereich der Blattwurzel (12) bis in den Bereich einer Blattspitze (14) erstrecken und dazu ausgebildet sind, einen Blitzstrom in Richtung zu der Blattwurzel (12) hin abzuleiten, und einem Potentialausgleichselement (30), das die beiden Blitzschutzleiter (26, 28) elektrisch miteinander verbindet, **dadurch gekennzeichnet, dass** das Potentialausgleichselement (30) an einer Außenseite des Windenergieanlagenrotorblatts (10) angeordnet ist und um die Profilendkante (20) herumführt.

2. Windenergieanlagenrotorblatt (10) nach Anspruch 1, **dadurch gekennzeichnet, dass** das Potentialausgleichselement (30) eine druckseitige Metallschiene (48) und eine saugseitige Metallschiene (46) aufweist, die im Bereich der Profilendkante (20) elektrisch miteinander verbunden sind oder ineinander übergehen.

3. Windenergieanlagenrotorblatt (10) nach Anspruch 2, **dadurch gekennzeichnet, dass** die druckseitige Metallschiene (48) und/oder die saugseitige Metallschiene (46) einen Querschnitt von 25 mm² oder mehr und/oder eine Breite von 30 mm oder mehr und/oder eine Höhe von 3 mm oder mehr aufweisen.

4. Windenergieanlagenrotorblatt (10) nach Anspruch 2 oder 3, **dadurch gekennzeichnet, dass** die druckseitige Metallschiene (48) und/oder die saugseitige Metallschiene (46) eine Höhe aufweisen, die sich an seitlichen Rändern und/oder an einem vorderen Rand bis auf 1 mm oder weniger verringert.

5. Windenergieanlagenrotorblatt (10) nach einem der Ansprüche 2 bis 4, **dadurch gekennzeichnet, dass** die beiden Metallschienen (46, 48) mit ihren hinteren Enden über die Profilendkante (20) überstehen und flächig aneinandergrenzen.

6. Windenergieanlagenrotorblatt (10) nach einem der Ansprüche 2 bis 5, **dadurch gekennzeichnet, dass** die beiden Metallschienen (46, 48) im Bereich der Profilendkante (20) über eine Verschraubung miteinander verbunden sind.

7. Windenergieanlagenrotorblatt (10) nach einem der Ansprüche 2 bis 6, **dadurch gekennzeichnet, dass** die beiden Metallschienen (46, 48) an ihren hinteren Enden zusammen eine Höhe (54) von 5 mm oder weniger aufweisen.

8. Windenergieanlagenrotorblatt (10) nach einem der Ansprüche 2 bis 7, **dadurch gekennzeichnet, dass** ein vorderes Ende der druckseitigen Metallschiene (48) in Strömungsrichtung hinter einem druckseitigen Hauptgurt (40) und/oder ein vorderes Ende der saugseitigen Metallschiene (46) in Strömungsrichtung hinter einem saugseitigen Hauptgurt (38) angeordnet sind.

9. Windenergieanlagenrotorblatt (10) nach einem der Ansprüche 2 bis 8, **dadurch gekennzeichnet, dass** die druckseitige Metallschiene (48) und/oder die saugseitige Metallschiene (46) eine Krümmung aufweisen, die einer Oberflächenkrümmung der Druckseite (16) bzw. der Saugseite (18) entspricht.

10. Windenergieanlagenrotorblatt (10) nach einem der Ansprüche 1 bis 9, **dadurch gekennzeichnet, dass** der saugseitige Blitzschutzleiter (26) an einer Innenseite einer saugseitigen Halbschale (32) und/oder der druckseitige Blitzschutzleiter (28) an einer Innenseite einer druckseitigen Halbschale (34) des Windenergieanlagenrotorblatts (10) angeordnet sind.

11. Windenergieanlagenrotorblatt (10) nach einem der Ansprüche 1 bis 10, **dadurch gekennzeichnet, dass** der saugseitige Blitzschutzleiter (26) und/oder der druckseitige Blitzschutzleiter (28) einen metallischen Leiter mit einem Querschnitt von 25 mm² oder mehr aufweisen.

12. Windenergieanlagenrotorblatt (10) nach einem der Ansprüche 1 bis 11, **dadurch gekennzeichnet, dass** der saugseitige Blitzschutzleiter (26) entlang einem saugseitigen Hauptgurt (38) und/oder der druckseitige Blitzschutzleiter (28) entlang einem druckseitigen Hauptgurt (40) verlaufen.

13. Windenergieanlagenrotorblatt (10) nach einem der Ansprüche 1 bis 12, **dadurch gekennzeichnet, dass** das Windenergieanlagenrotorblatt (10) an einer Außenseite im Bereich einer Profilnasenkante (22) eine Heizeinrichtung (44) aufweist.

14. Verfahren zur Herstellung eines Windenergieanlagenrotorblatts (10) mit den folgenden Schritten:
• Herstellen einer druckseitigen Halbschale (34), die einen druckseitigen Blitzschutzleiter (28) aufweist,
• Herstellen einer saugseitigen Halbschale (32), die einen saugseitigen Blitzschutzleiter (26) aufweist, wobei sich der druckseitige Blitzschutzleiter (28) und der saugseitige Blitzschutzleiter (26) von einem Anschlusspunkt im Bereich einer Blattwurzel (12) bis in den Bereich einer Blattspitze (14) erstrecken,
• Zusammenfügen der beiden Halbschalen (32, 34) zu dem Windenergieanlagenrotorblatt (10),
• Anordnen eines Potentialausgleichselements (30) an einer Außenseite des Windenergieanlagenrotorblatts (10), so dass das Potentialausgleichselement (30) um eine Profilendkante (20) des Windenergieanlagenrotorblatts (10) herumführt,
• Herstellen einer elektrischen Verbindung zwischen dem Potentialausgleichselement (30) und dem druckseitigen Blitzschutzleiter (28) sowie zwischen dem Potentialausgleichselement (30) und dem saugseitigen Blitzschutzleiter (26).

15. Verfahren nach Anspruch 14, **dadurch gekennzeichnet, dass** das Potentialausgleichselement (30) eine druckseitige Metallschiene (48) und/oder eine saugseitige Metallschiene (46) aufweist, die vor dem Anordnen des Potentialausgleichselements (30) an dem Windenergieanlagenrotorblatt (10) mit einer Krümmung versehen wird, die einer Oberflächenkrümmung der Druckseite (16) bzw. der Saugseite (18) entspricht.

## Claims

1. A wind turbine rotor blade (10) having a blade root (12), a pressure side (16), a suction side (18), an airfoil trailing edge (20), a pressure side lightning conductor (28) and a suction side lightning conductor (26), wherein the two lightning conductors (26, 28) extend from a connection point in the region of the blade root (12) into the region of a blade tip (14) and are designed to conduct a lightning current towards the blade root (12), and a potential equalization element (30) that electrically connects the two lightning conductors (26, 28) to each other, **characterized in that** the potential equalization element (30) is arranged on an outer side of the wind turbine rotor blade (10) and runs around the airfoil trailing edge (20).

2. The wind turbine rotor blade (10) according to claim 1, **characterized in that** the potential equalization element (30) has a pressure side metal bar (48) and a suction side metal bar (46) that are electrically connected to each other or merge into each other in the region of the airfoil trailing edge (20).

3. The wind turbine rotor blade (10) according to claim 2, **characterized in that** the pressure side metal bar (48) and/or the suction side metal bar (46) have a cross section of 25 mm² or more, and/or a width of 30 mm or more, and/or a height of 3 mm or more.

4. The wind turbine rotor blade (10) according to claim 2 or 3, **characterized in that** the pressure side metal bar (48) and/or the suction side metal bar (46) possess a height that decreases up to 1 mm or less at lateral edges and/or at a front edge.

5. The wind turbine rotor blade (10) according to one of claims 2 to 4, **characterized in that** the rear ends of the two metal bar (46, 48) project beyond the airfoil trailing edge (20) and abut to each other flatly.

6. The wind turbine rotor blade (10) according to one of claims 2 to 5, **characterized in that** the two metal bars (46, 48) are connected to each other in the region of the airfoil trailing edge (20) by a bolted connection.

7. The wind turbine rotor blade (10) according to one of claims 2 to 6, **characterized in that** together, the two metal bars (46, 48) have a height (54) of 5 mm or less at their rear ends.

8. The wind turbine rotor blade (10) according to one of claims 2 to 7, **characterized in that** a front end of the pressure side metal bar (48) is arranged behind a pressure side main spar cap (40) in the direction of flow, and/or a front end of the suction side metal bar (46) is arranged behind a suction side main spar cap (38) in the direction of flow.

9. The wind turbine rotor blade (10) according to one of claims 2 to 8, **characterized in that** the pressure side metal bar (48) and/or the suction side metal bar (46) have a curvature that corresponds to a surface curvature of the pressure side (16), or respectively the suction side (18).

10. The wind turbine rotor blade (10) according to one of claims 1 to 9, **characterized in that** the suction side lightning conductor (26) is arranged on an inner side of a suction side half shell (32), and/or the pressure side lightning conductor (28) is arranged on an inner side of a pressure side half shell (34) of the wind turbine rotor blade (10).

11. The wind turbine rotor blade (10) according to one of claims 1 to 10, **characterized in that** the suction side lightning conductor (26) and/or the pressure side lightning conductor (28) have a metal conductor with a cross section of 25 mm² or more.

12. The wind turbine rotor blade (10) according to one of claims 1 to 11, **characterized in that** the suction side lightning conductor (26) runs along a suction side spar cap (38), and/or the pressure side lightning conductor (28) runs along a pressure side spar cap (40).

13. The wind turbine rotor blade (10) according to one of claims 1 to 12, **characterized in that** the wind turbine rotor blade (10) has a heating device (44) on an outer side in the region of a leading edge (22).

14. A method for the production of a wind turbine rotor blade (10) having the following steps:
• manufacturing a pressure side half shell (34) having a pressure side lightning conductor (28),
• manufacturing a suction side half shell (32) having a suction side lightning conductor (26), wherein the pressure side lightning conductor (28) and the suction side lightning conductor (26) extend from a connection point in the region of a blade root (12) into the region of a blade tip (14),
• joining the two half shells (32, 34) into the wind turbine rotor blade (10),
• arranging a potential equalization element (30) on an outer side of the wind turbine rotor blade (10) so that the potential equalization element (30) runs around an airfoil trailing edge (20) of the wind turbine rotor blade (10),
• establishing an electrical connection between the potential equalization element (30) and the pressure side lightning conductor (28), as well as between the potential equalization element (30) and the suction side lightning conductor (26).

15. The method according to claim 14, **characterized in that** the potential equalization element (30) has a pressure side metal bar (48) and/or a suction side metal bar (46) that is provided with a curvature before arranging the potential equalization element (30) on the wind turbine rotor blade (10), said curvature corresponding to a surface curvature of the pressure side (16), or respectively the suction side (18).

## Revendications

1. Pale de rotor d'éolienne (10) avec un pied de pale (12), un côté de pression (16), un côté d'aspiration (18), une arête d'extrémité de profil (20), un conducteur de protection contre la foudre côté pression (28) et un conducteur de protection contre la foudre côté aspiration (26), dans laquelle les deux conducteurs de protection contre la foudre (26, 28) s'étendent d'un point de raccordement dans la région du pied de pale (12) jusque dans la région d'une pointe de pale (14) et sont conçus pour dériver un courant de foudre en direction du pied de pale (12), et un élément de compensation de potentiel (30) qui connecte électriquement ensemble les deux conducteurs de protection contre la foudre (26, 28), **caractérisée en ce que** l'élément de compensation de potentiel (30) est disposé sur un côté externe de la pale de rotor d'éolienne (10) et contourne l'arête d'extrémité de profil (20).

2. Pale de rotor d'éolienne (10) selon la revendication 1, **caractérisée en ce que** l'élément de compensation de potentiel (30) présente un rail métallique côté pression (48) et un rail métallique côté aspiration (46) qui sont connectés électriquement ensemble ou se transforment l'un en l'autre dans la région de l'arête d'extrémité de profil (20).

3. Pale de rotor d'éolienne (10) selon la revendication 2, **caractérisée en ce que** le rail métallique côté pression (48) et/ou le rail métallique côté aspiration (46) présentent une section transversale de 25 mm² ou plus et/ou une largeur de 30 mm ou plus et/ou une hauteur de 3 mm ou plus.

4. Pale de rotor d'éolienne (10) selon la revendication 2 ou 3, **caractérisée en ce que** le rail métallique côté pression (48) et/ou le rail métallique côté aspiration (46) présentent une hauteur qui diminue jusqu'à 1 mm ou moins sur des bords latéraux et/ou sur un bord avant.

5. Pale de rotor d'éolienne (10) selon une des revendications 2 à 4, **caractérisée en ce que** les deux rails métalliques (46, 48) dépassent avec leurs extrémités arrière au-delà de l'arête d'extrémité de profil (20) et se jouxtent de manière plane.

6. Pale de rotor d'éolienne (10) selon une des revendications 2 à 5, **caractérisée en ce que** les deux rails métalliques (46, 48) sont connectés ensemble par le biais d'un vissage dans la région de l'arête d'extrémité de profil (20).

7. Pale de rotor d'éolienne (10) selon une des revendications 2 à 6, **caractérisée en ce que** les deux rails métalliques (46, 48) présentent ensemble une hauteur (54) de 5 mm ou moins à leurs extrémités arrière.

8. Pale de rotor d'éolienne (10) selon une des revendications 2 à 7, **caractérisée en ce qu'**une extrémité avant du rail métallique côté pression (48) est disposée dans le sens d'écoulement derrière une membrure principale côté pression (40) et/ou une extrémité avant du rail métallique côté aspiration (46) est disposée dans le sens d'écoulement derrière une membrure principale côté aspiration (38).

9. Pale de rotor d'éolienne (10) selon une des revendications 2 à 8, **caractérisée en ce que** le rail métallique côté pression (48) et/ou le rail métallique côté aspiration (46) présentent une courbure qui correspond à une courbure superficielle du côté de pression (16) ou du côté d'aspiration (18).

10. Pale de rotor d'éolienne (10) selon une des revendications 1 à 9, **caractérisée en ce que** le conducteur de protection contre la foudre côté aspiration (26) est disposé sur un côté interne d'une demi-coque côté aspiration (32) et/ou le conducteur de protection contre la foudre côté pression (28) est disposé sur un côté interne d'une demi-coque côté pression (34) de la pale de rotor d'éolienne (10).

11. Pale de rotor d'éolienne (10) selon une des revendications 1 à 10, **caractérisée en ce que** le conducteur de protection contre la foudre côté aspiration (26) et/ou le conducteur de protection contre la foudre côté pression (28) présentent un conducteur métallique avec une section transversale de 25 mm² ou plus.

12. Pale de rotor d'éolienne (10) selon une des revendications 1 à 11, **caractérisée en ce que** le conducteur de protection contre la foudre côté aspiration (26) s'étend le long d'une membrure principale côté aspiration (38) et/ou le conducteur de protection contre la foudre côté pression (28) s'étend le long d'une membrure principale côté pression (40).

13. Pale de rotor d'éolienne (10) selon une des revendications 1 à 12, **caractérisée en ce que** la pale de rotor d'éolienne (10) présente un dispositif de chauffage (44) sur un côté externe dans la région d'un bord d'attaque de profil (22).

14. Procédé de fabrication d'une pale de rotor d'éolienne (10) avec les étapes suivantes :
• fabrication d'une demi-coque côté pression (34) qui présente un conducteur de protection contre la foudre côté pression (28),
• fabrication d'une demi-coque côté aspiration (32) qui présente un conducteur de protection contre la foudre côté aspiration (26), dans lequel le conducteur de protection contre la foudre côté pression (28) et le conducteur de protection contre la foudre côté aspiration (26) s'étendent d'un point de raccordement dans la région d'un pied de pale (12) jusque dans la région d'une pointe de pale (14),
• assemblage des deux demi-coques (32, 34) en la pale de rotor d'éolienne (10),
• agencement d'un élément de compensation de potentiel (30) sur un côté externe de la pale de rotor d'éolienne (10) de sorte que l'élément de compensation de potentiel (30) contourne une arête d'extrémité de profil (20) de la pale de rotor d'éolienne (10),
• réalisation d'une connexion électrique entre l'élément de compensation de potentiel (30) et le conducteur de protection contre la foudre côté pression (28) ainsi qu'entre l'élément de compensation de potentiel (30) et le conducteur de protection contre la foudre côté aspiration (26).

15. Procédé selon la revendication 14, **caractérisé en ce que** l'élément de compensation de potentiel (30) présente un rail métallique côté pression (48) et/ou un rail métallique côté aspiration (46) qui sont pourvus d'une courbure qui correspond à une courbure superficielle du côté de pression (16) ou du côté d'aspiration (18) avant l'agencement de l'élément de compensation de potentiel (30) sur la pale de rotor d'éolienne (10).
